# EUROPÄISCHE PATENTSCHRIFT

(11) **EP 1 092 257 B1**
(45) Veröffentlichungstag und Bekanntmachung des Hinweises auf die Patenterteilung: **31.08.2005**
(21) Anmeldenummer: 99939351.5
(22) Anmeldetag: 16.06.1999
(51) Int. Cl.: H02K 1/02

(54) **ELEKTROMOTOR**
ELECTRIC MOTOR
MOTEUR ELECTRIQUE

(30) Priorität: 29.06.1998 DE 19829053
(43) Veröffentlichungstag der Anmeldung: 18.04.2001
(73) Patentinhaber: SIEMENS AKTIENGESELLSCHAFT, 80333 München (DE)
(72) Erfinder: WELLISCH, Ernst, D-90449 Nürnberg (DE)
(86) Internationale Anmeldenummer: PCT/DE1999/001772
(87) Internationale Veröffentlichungsnummer: WO 2000/001052

(56) Entgegenhaltungen:
- EP-A- 0 641 059
- US-A- 5 296 773
- PATENT ABSTRACTS OF JAPAN vol. 014, no. 190 (E-0918), 18. April 1990 (1990-04-18) & JP 02 036741 A (KOYO SEIKO CO LTD), 6. Februar 1990 (1990-02-06)
- PATENT ABSTRACTS OF JAPAN vol. 012, no. 139 (C-491), 27. April 1988 (1988-04-27) & JP 62 256917 A (NIPPON STEEL CORP), 9. November 1987 (1987-11-09)
- PATENT ABSTRACTS OF JAPAN vol. 018, no. 468 (C-1244), 31. August 1994 (1994-08-31) & JP 06 145917 A (HITACHI METALS LTD), 27. Mai 1994 (1994-05-27)

## Beschreibung

Die Erfindung betrifft einen Elektromotor mit einem Stator und einem Rotor, der mindestens ein durch Bleche geschichtetes Blechpaket aufweist, das zur Aufnahme von Rotorwicklungen mit Nuten versehen ist.

Aus der DE-1 107 804 ist eine elektrische Maschine bekannt, bei der der Dämpferkäfig des Läufers, der Pole bzw. der Polschuhe aufweist aus Form-, Kokillen- oder Druckguß besteht. Die Kurzschlußringe sind als verlängerte Polspitzen ausgebildet, welche die auf dem Polschenkel befindliche Wicklung als Schutz gegen eine Deformation oder Zerstörung durch Fliehkräfte an den Stirnseiten des Poleisens abstützen und bis in den Raum zwischen zwei benachbarten Polwicklung hinein reichen. Dabei werden nur zum Teil die hohe Zentrifugalkräfte des Läufers aufgenommen.

Aus der EP-A-64 10 59 ist ein Läuferblechpaket mit Endblechen aus Baustahl bekannt, um eine axiale Stützwirkung zu erzielen. Die Stützwirkung am Stabaustritt muss jedoch von den E-lektroblechen übernommen werden. Während des Betriebs in einer derartigen Maschine werden durch die Fliehkräfte die Rotorstäbe nach außen gedrückt und stützen sich im Bereich der Streunut am Stabaustritt des Blechpakets ab.

Außerdem ist es bekannt, das Läuferblechpaket mit Endblechen aus Baustahl oder Druckringen herzustellen. Die Endbleche sind im Nutbereich als Druckfinger ausgebildet, um eine axiale Stützwirkung zu erzielen. Ein radialer Kraftschluß zwischen Endblech und den Kurzschlußstäben ist im Nutbereich nicht gegeben. Die Stützwirkung am Stabaustritt muß vom Elektroblech übernommen werden. Die Nuten des Elektroblechs zur Aufnahme der Rotorstäbe sind mit einer Streunut versehen, die zum Außendurchmesser des Bleches offen ist. Während des Betriebs werden durch die Fliehkräfte die Rotorstäbe nach außen gedrückt und stützen sich im Bereich der Streunut am Stabaustritt des Blechpakets ab. An dieser Stelle begrenzt die Streckgrenze bzw. die Festigkeit des Elektroblechs eine höhere Betriebsdrehzahl.

Demnach liegt der Erfindung die Aufgabe zugrunde, einen Elektromotor zu schaffen, dessen Rotor für hohe Drehzahlen ausgelegt ist und dabei eine hohe Betriebssicherheit gewährleistet.

Die Lösung der gestellten Aufgabe gelingt dadurch, daß an der Stirnseite mindestens eines Blechpakets wenigstens ein Rotorendblech vorgesehen ist, welches aus hochfestem Feinkornbaustahl besteht und zumindest in Rotorachsnäche die geometrische Form der im Blechpaket geschichteten Bleche aufweist.

Diese Rotorendbleche aus hochfestem Feinkornbaustahl können durch Laserschnitt, Wasserstrahlschnitt oder andere geeignete Schneidverfahren hergestellt werden und weisen eine hohe Streckgrenze und Festigkeit (770 bis 980 Nm/mm²) auf. Damit können die materiellen Betriebsspannungen für hohe Drehzahlen dauerfest beherrscht werden. Die Dauerfestigkeiten dieser Werkstoffe liegen für den angegebenen Festigkeitsbereich bei 310 bis 400 Nm/mm².

Die Rotorendbleche werden auf die bearbeitete oder unbearbeitete Rotorwelle geschrumpft oder gepreßt.

In einer weiteren Ausführungsform werden die Streunuten der Rotorendbleche geschlossen, so daß damit eine weitere Verfestigung und somit eine Anhebung der Streckgrenze der Elektrobleche erreicht wird. Die radialen Kräfte, vor allem des Wikkelkopfes bei hohen Drehzahlen, können dadurch besser aufgenommen werden. Es erfolgt auch dadurch eine weniger materialbelastende Abstützung der Wicklung oder der Wickelköpfe im Bereich der Elektrobleche. Durch ein zumindest teilweises Anordnen von Streunuten am Rotorendblech können die elektromagnetischen Eigenschaften verbessert werden. Durch eine vorzugsweise Vergrößerung des Querschnitts im hochbelasteten Bereich kann eine weitere Reduzierung der Materialspannungen eintreten.

Neben den Rotorendblechen der einzelnen Blechpakete bilden vorzugsweise auch axial weiter innenliegende Elektrobleche oder Teilblechpakete eine geschlossene Streunut und tragen so zu einer weiteren Abstützung der Wicklung bzw. der Wickelköpfe bei, ohne die elektromagnetischen Eigenschaften des Läufers ungünstig zu beeinflussen.

Die Erfindung sowie weitere vorteilhafte Ausgestaltungen der Erfindung gemäß den Merkmalen der Unteransprüche werden im folgenden anhand schematisch dargestellter Ausführungsbeispiele in der Zeichnung näher erläutert. Darin zeigen:
- FIG 1: einen Axialschnitt eines derartigen Rotors,
- FIG 2: einen Querschnitt eines Rotorendblechs,
- FIG 3: einen weiteren Querschnitt eines Rotorendblechs,
- FIG 4: einen Ausschnitt eines Rotorendblechs mit geschlossener Streunut.
- FIG 5: einen Ausschnitt eines Rotorendblechs mit offener Streunut

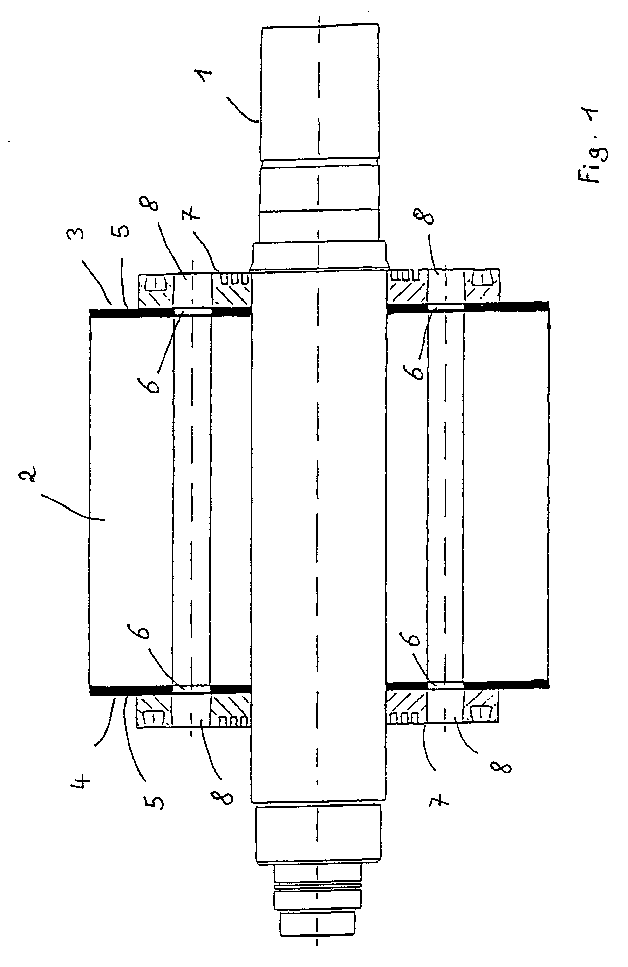

FIG 1 zeigt eine Rotorwelle 1 mit einem aufgeschrumpftem oder aufgepreßten Blechpaket 2, das an den jeweiligen Stirnseiten 3, 4 Rotorendbleche 5 aufweist. Die Rotorendbleche 5 weisen axiale Öffnungen 6 auf. Diese Öffnungen 6 entsprechen den Öffnungen des Blechpakets 2. Diese Öffnungen 6 dienen im wesentlichen einer achsparallelen Kühlluftzufuhr. An den jeweiligen Stirnseiten 3, 4 der Rotorendbleche 5 befinden sich zur axialen Befestigung des Blechpakets 2 Druckgußringe 7, die ebenfalls Öffnungen 8 aufweisen, durch die der Kühlluftstrom treten kann.

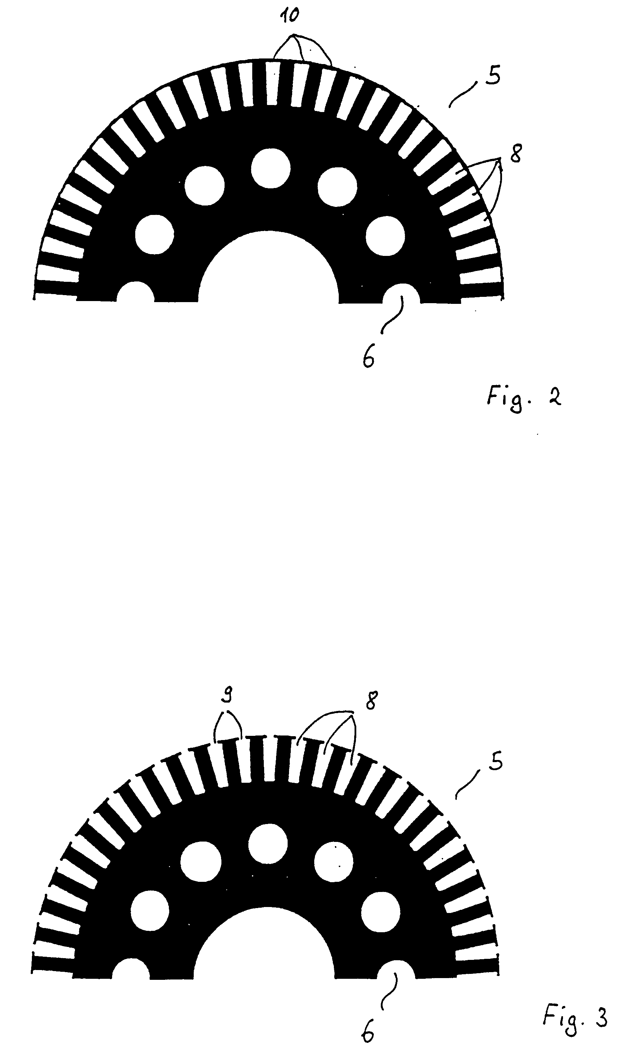

FIG 2 , Fig 3 zeigen den halben Querschnitt eines derartigen Rotorendblechs 5 mit den Öffnungen 6 für den Kühlluftstrom und den am Außenumfang befindlichen Nuten 8, in denen sich nicht näher dargestellte Rotorwicklungen oder Stäbe befinden.

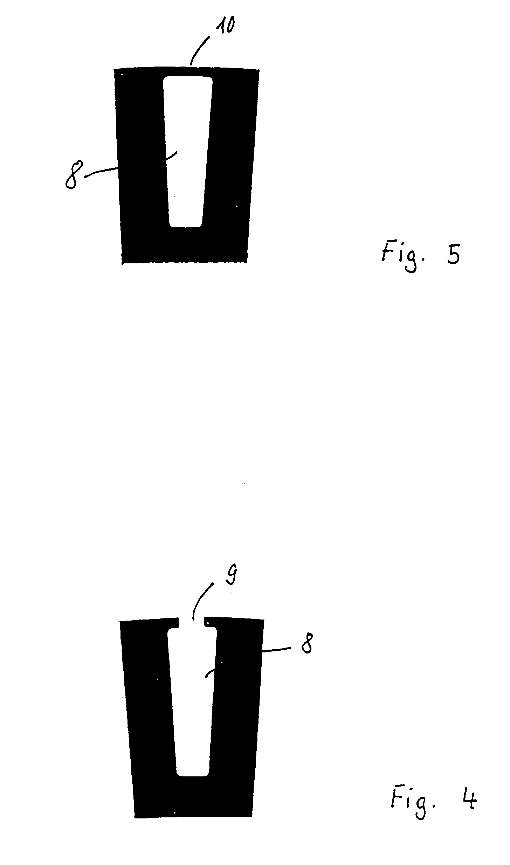

Gemäß Fig 4, Fig 5 stellen dabei die Nuten 8 eine offene Streunut 9 oder eine geschlossene Streunut 10 dar. Die geschlossenen Streunuten 10 haben den Vorteil, daß sie zu einer weiteren Erhöhung der Streckgrenze bei hohen Drehzahlen des Motors beitragen. Die offenen Streunuten 9 haben demgegenüber bessere elektromagnetische Eigenschaften.

Die zentrifugalen Kräfte bei Betrieb eines nicht näher dargestellten Elektromotors wirken somit vor allem auf die Rotorendbleche 5 aus hochfestem Feinkornbaustahl, sodaß eine Entlastung der Nuten 8 des Blechpakets 2 auftritt. Die Wickelköpfe als auch die Wicklungen selbst, stützen sich im wesentlichen auf den Rotorendblechen 5 ab. Derartige Rotorendbleche 5 werden hauptsächlich durch Schneidverfahren wie Wasserschneiden oder Laserschneiden hergestellt. Es sind auch andere Schneidverfahren oder Stanzverfahren dafür geeignet.

## Patentansprüche

1. Elektromotor mit einem Stator und einem Rotor, der mindestens ein durch Bleche geschichtetes Blechpaket (2) aufweist, das zur Aufnahme von Rotorwicklungen mit Nuten (8) versehen ist, **dadurch gekennzeichnet, daß** an der Stirnseite (3, 4) mindestens eines Blechpakets (2) wenigstens ein Rotorendblech (5) vorgesehen ist, welches aus hochfestem Feinkornbaustahl besteht und zumindest in Rotorachsnähe die geometrische Form der im Blechpaket (2) geschichteten Bleche aufweist.

2. Elektromotor nach Anspruch 1, **dadurch gekennzeichnet, daß** die Nuten (8) des Rotorendbleches (5) geschlossen sind.

3. Elektromotor nach Anspruch 1, **dadurch gekennzeichnet, daß** die Nuten (8) des Rotorendbleches (5) zumindest teilweise Streunuten (9) aufweisen.

4. Elektromotor nach einem der vorhergehenden Ansprüche,
**dadurch gekennzeichnet, daß** der Elektromotor ein schnellaufender, hochbelasteter Asynchronmotor ist.

## Claims

1. Electric motor with a stator and a rotor, which features at least one laminated core (2) layered by laminated plates which is provided with slots (8) to accommodate rotor windings,
**characterized in that**, on the face side (3, 4) of at least one laminated core (2) at least one rotor end plate (5) is provided consisting of high-strength, fine-grain constructional steel and at least in the vicinity of the rotor axis has the geometrical form of the laminated plates in the laminated core (2).

2. Electric motor in accordance with Claim 1, **characterized in that** the slots (8) of the rotor end plate (5) are closed.

3. Electric motor in accordance with Claim 1, **characterized in that** the slots (8) of the rotor end plate (5) at least partly feature leakage slots (9).

4. Electric motor in accordance with one of the previous claims, **characterized in that** the electric motor is a highspeed, high-load asynchronous motor.

## Revendications

1. Moteur électrique comprenant un stator et un rotor, qui a au moins un paquet (2) de tôles feuilletés par des tôles et muni d'encoches (8) pour la réception d'enroulements rotoriques, **caractérisé en ce que** sur le côté (3, 4) frontal d'au moins un paquet (2) de tôles est prévue au moins une tôle (5) rotorique d'extrémité, qui est en acier pour la construction à grain fin très résistant et qui a, au moins à proximité de l'axe du rotor, la forme géométrique des tôles feuilletées dans le paquet (2) de tôles.

2. Moteur électrique suivant la revendication 1 , **caractérisé en ce que** les encoches (8) de la tôle (5) rotorique d'extrémité sont fermées.

3. Moteur électrique suivant la revendication 1 , **caractérisé en ce que** les encoches (8) de la tôle ( 5) rotorique d'extrémité comportent, au moins en partie, des encoches (9) de dispersion.

4. Moteur électrique suivant l'une des revendications précédentes, **caractérisé en ce que** le moteur électrique est un moteur asynchrone, à rotation rapide et à grande charge.
